(19) Europäisches Patentamt / European Patent Office / Office européen des brevets

(11) **EP 2 530 876 B1**

(12) **EUROPEAN PATENT SPECIFICATION**

(45) Date of publication and mention
of the grant of the patent:
**18.05.2016   Bulletin 2016/20**

(51) Int Cl.:
*H04L 12/26* *(2006.01)*    *H04L 12/24* *(2006.01)*

(21) Application number: **12305318.3**

(22) Date of filing: **16.03.2012**

(54) **Method for providing a service indication by monitoring quality parameters in a customer premises network**

Verfahren zur Bereitstellung einer Dienstanzeige durch Überwachung der Qualitätsparameter in einem Kundennetzwerk

Procédé permettant de fournir une indication de service par le contrôle de paramètres de qualité dans un réseau sur le site du client

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.06.2011   EP 11290250**

(43) Date of publication of application:
**05.12.2012   Bulletin 2012/49**

(73) Proprietor: **ALCATEL LUCENT**
**92100 Boulogne-Billancourt (FR)**

(72) Inventors:
 • **Gacanin, Haris**
  **2600 Antwerpen (BE)**
 • **Pizurica, Veselin**
  **9052 Gent (BE)**

(74) Representative: **ALU Antw Patent Attorneys**
**Copernicuslaan 50**
**2018 Antwerpen (BE)**

(56) References cited:
  **WO-A1-2005/094001    WO-A2-2006/026262**
  **WO-A2-2012/015817**

 • **TOM STARR AT&T LABS USA VERNON REED AT&T LABS USA: "G.hn Management and Diagnostics Specifications;C 807", ITU-T DRAFTS ; STUDY PERIOD 2009-2012, INTERNATIONAL TELECOMMUNICATION UNION, GENEVA ; CH, vol. Study Group 15 ; 4/15, 16 May 2010 (2010-05-16), pages 1-12, XP017447504,**
 • **LES BROWN LANTIQ GERMANY: "Draft revised Recommendation ITU-T G.9960 (ex. G.hn) (for Consent on 16 September 2011);TD 496 (PLEN/15)", ITU-T DRAFTS ; STUDY PERIOD 2009-2012, INTERNATIONAL TELECOMMUNICATION UNION, GENEVA ; CH, vol. Study Group 15 ; 4/15, 7 December 2011 (2011-12-07), pages 1-168, XP017569812, [retrieved on 2011-12-07]**
 • **"End-user multimedia QoS categories; G.1010 (11/01)", ITU-T STANDARD, INTERNATIONAL TELECOMMUNICATION UNION, GENEVA ; CH, no. G.1010 (11/01), 29 November 2001 (2001-11-29), pages 1-18, XP017463369, [retrieved on 2002-07-17]**

## Description

### Field of Invention

The present invention pertains to a method of providing a service indication by monitoring quality parameters, such as quality of service and/or quality of experience, in a customer premises network.

### Background

Customer premises networks have been seen as the customer's responsibility since the physical wiring is within the customers premises. However, to establish customer loyalty while increasing revenue, service/network providers must quickly and efficiently correct any problems that surface inside the home network as well. To satisfy customer expectations the operators must deliver broadband services with no interference from other traffic. In particular, the service quality is the main issue in gaining the customers trust.

When faced with obvious service quality issues (usually reported by customer) the operators will dispatch their technicians to pinpoint the source of the problem and possible solution.

The communication infrastructure is increasingly used for information sharing, for example media content sharing, video conferencing with remote participants, etc.

Tom Starr, AT&T Labs, USA, "G.hn Management and Diagnostics Specifications:C 807", ITU-T drafts Study period 2009-2012, International telecommunication union, Geneva, CH, vol. Study group 15, 4/15, 16 May 2010, (XP 017447504) discloses a list of possible issues that could arise in a home network. The home gateway is used to collect G.hn network information. The collected information is made available both local and remote. Data collection is initiated by the home gateway. Specific attention is given to transmission rate. A list of quality of service parameters is provided, including also reference (or desired) values. Errors in frames are represented a as percentage of the total number of frames.

### Summary

The invention is based on the insight that network devices in multiple locations wish to access "heavy-load" content using peer-to-peer architecture resulting more often in unexpected lowered quality of service.

It is therefore an object of the present invention to provide a method that allows reducing the costs for operators and allows pinpointing the source of loss of the quality of service.

In a first aspect of the present invention, there is provided a method for providing a service indication in a customer network by monitoring customer network parameters relating to quality of service in a customer network comprising a gateway having links to multiple devices at the LAN side. The LAN network devices can be connected through different mediums to the gateway.

According to the invention the method comprises for a selected number of at least two links:

- determining a value for a quality of service parameter for the link;
- forming quality of service indicators (link identification metric or LIM) for the selected number of links using the determined values of quality of service parameters,

wherein the method further comprises providing a single service indication for each selected link based on combinations of values of the quality of service indicator (LIM) for each selected link.

In this application a single service indication can indicate a service level that is available for that link and/or can indicate a cause for a drop in the actual service level.

The collected multi dimensional information is condensed into a single service indication for the link. The single service indication can be provided to the user over a suitable interface. This allows a non-skilled user to interpret the results of the quality of service parameter determinations. Service indications for two or more links are provided either to the customer or to the service provider of the customer. And by providing at least two service indications alternatives can be provided: e.g. if it is determined that a specific service can't be used on a specific first link, possibly the service can be connected using the second, other link.

The service indication is based on a combination of the at least two determined values of quality of service parameters. This allows a more detailed analysis of the requirements for certain services and allows a better determination of a service status.

According to the method the quality of service is checked for several links in the customer premises network. The present invention is based on the insight that quality of service for a specific link is dependent also on the quality of service of other links in the same network. Specifically when high-yield services are used in the home network, e.g. data streaming from a home server over the home network to a home client, the drop in service indication can be linked to the start of these services.

The quality of service parameters can be determined for the links. The quality of service parameter can be one or more parameters from a list physical-layer and network statistic parameters. Examples of quality of service parameters are:

- average rate
- bit error rate
- signal-to-noise ratio
- channel gain
- device ID
- network ID

The indicator or link identification metric (LIM) allows collecting the quality of service and can be used as a agnostic service parameter. The LIM can be calculated for each of the selected links.

The method according to the invention allows diagnosing the quality of service in a customer premises network. The method allows automating the method. Further the method allows taking into account the influence of other links in the customer premises network to explain certain loss of quality, specifically temporary losses as a result of an overload in capacity.

In an embodiment forming the quality of service indicator for a first link comprises using determined values for quality of service parameters of other links from the selected links. This allows analysis of the quality of a link including taking into account quality of links in other parts of the network. This in turn allows providing an indication to a user that the link quality is dropping as a result of something happening in the other link. E.g. if the other link starts streaming video data, this will influence the quality in the first link. Providing such a service to the user will improve the experience of the user as an issue arising in the network can be linked to a cause. Specifically non-experienced user benefits from indications of the source of quality losses.

In an embodiment the quality of service indicators (LIM) are collected over time. This allow providing historical data and thereby indications for the start of a certain problem hindering a service. This allows and increases the possibility of finding the cause of a certain loss in quality, e.g..a source of noise etc.. Preferably data is collected for each selected link.

In an embodiment the single service indication for each selected link is based on combinations of predetermined domains for the values in the quality of service indicators. If the collected values in a quality of service indicator each fall within a predetermined domain related to a certain service, e.g. HD-TV, than the quality of service indicator represents a link capable of HD-TV and the user can be provided with a indication that the link can be used for HD-TV. In an embodiment a local interface allows the user to access the single service indicators and allows assessment thereof.

In an embodiment the predetermined domains relate to operating conditions for several predetermined services and the single service indicator indicates for which of the predetermined services the link is suitable. If a link is suitable for HD-TV, the link is also suitable for FTP, emailing, messaging etc..

In an embodiment the single service indication provides an indication for the suitability of the link for one or more services selected from e.g. HD-TV, SD-TV, VoiceOverIP, Messaging, FTP services, E-mailing, web-access, streaming media, etc..

In an embodiment the quality of service indicator is formed as a vector of at least the determined quality of service parameters for each selected link. The vector can be used as a standard from which service indication can be determined by combining multiple determined values. The vector forms a agnostic parameters for the quality of service of the link.

In an embodiment the quality of service indicator (LIM) also comprises one or more link variables such as MAC address. The MAC address can be used to determine what service could be required for that link and in an embodiment the status indication provides a single YES/NO indication for whether the link is suitable for the required service. In an embodiment MAC-address information is retrieved from the internet to determine what service the MAC-address is linked to.

In a further embodiment the method provides a service indication for a first link indicating the a device connected to a second link should be linked to the first link in order to improve the service quality. This is a specific example of the insight of the invention to collect quality of service for a large part, preferably all, links of the home network.

Other link variables provided in embodiments of the method are not time dependent, such as physical-layer, and network statistic parameters such as signal-to noise ratio, channel gain, list of devices, list of neighboring devices, list of device ID's, list of neighboring networks and indications of presence. This allows a more detailed analysis of the source of possible disruption of the selected link from the quality of service indicator.

In order to compare the determined value of the quality of service parameter with a network property the respective expected value for that quality of service parameter for that specific link is used. The predetermined or expected predetermined values are available in different standards (e.g., IEEE, ITU, etc.). The values can be fixed values in a memory connected to the customer premises network. In an embodiment the expected values are set by and are available from a domain master node having a memory comprising the expected value for the specific link with the network device. The value can e.g. be dependent on the exchange protocol between a domain master node and the network device.

In an embodiment the selected number of links comprises each link in the customer network. This will allow a complete analysis of the customer premises network. The combined information regarding the multiple, and preferably all, links, can be combined in a single collection of indicators. The collection of LIM's can be indicated by $LIM_{A1-An}$ for each link A1, A2, A3 - An.

In an embodiment values and predetermined values for multiple quality of service parameters for the link(s) are determined and provided respectively. By collecting several parameters a more detailed analysis is possible of a problem in the network. This allows collecting several indicators which together can be used to determine a quality of experience of the link(s)/at the one or more users.

In an embodiment the quality of service indicator (LIM) comprises a set of ratios of some of the determined and predetermined values for quality of service parameters. In combination with the predetermined values, the indicator becomes a single set of values that can be used as an agnostic service parameter for the links and for the network as a whole. The indicator can also comprise values not expressed as ratio and can comprise constant values such as MAC-address.

In an embodiment the LIM values for a network are collected and saved over time allowing a historic overview of the quality of experience of a user in the network and allowing to track the possible origin of the problem experience by the user.

In an embodiment the measured respective values for respective quality of service parameters can be identified by M1, M2, M3, ... Mn. When the parameters are followed in time, M1 and M1' can show the result of different measurements at different time moments for the values for the quality of service parameters. The combined measured values in time can be indicated by the' following set for a link A:

$$\{(M1, M1', M1'', ...), \{(M2, M2', M2'', ...), \{(M3, M3', M3'', ...) ... (Mn, Mn', Mn'', ...)\}_A$$

In an embodiment the predetermined values of quality of service parameters can be identified by the set {E1, E2, E3, ... , En} with E1, E2, E3, ... , En formed by an expected value e.g. being predefined in a standard, for a respective quality of service parameter.

Other parameters relating to quality of service that can be included in the method and that could be included in the indicator are list of devices, list of neighbor devices, list of device ID's list of available neighboring networks and indication of presence. These parameters can be added to the indicator to further allow identification of problems.

In an embodiment calculating the quality of service indicator (link identification metric, LIM) comprises taking ratios of the determined and predetermined values. A ratio of a determined value over the predetermined value will provide a calibrated indication of the functionality of a certain link. Examples of ratios that can be a part of the LIM are: average rate over expected rate and/or measured bit error rate over expected bit error rate. In an embodiment the LIM is formed by {(M1, M1', M1'', ...) / E1, {(M2, M2', M2'', ...) / E2, {(M3, M3', M3'', ...) / E3, ..., (Mn, Mn', Mn'', ...) / En}.

In an embodiment the gateway transmits the values and predetermined values for the quality of service to a remote network analyzer connected to the gateway outside the home network. In an embodiment the gateway transmits the calculated indicators for the quality of service to a remote network analyzer connected to the gateway outside the home network. This will allow to externally determine a problem in the customer premises network. The provider is now able to answer a question from a customer relating to the customer premises network, e.g. when the customer calls.

In an embodiment the network analyzer communicates with the gateway using a TR-069 protocol exchange.

In an embodiment the indicator(s) for the quality of service for the link is calculated at the network analyzer. In an embodiment the indicator(s) for the quality of service for the link is calculated at the gateway.

In an embodiment the value for the quality of service parameter for the link is determined at the gateway.

In an embodiment the indicator(s) are stored at a server. In an embodiment the method is repeated at predetermined intervals. By repeating the method and storing the indicator values, it is possible to create a historic overview of the network performance.

According to another aspect of the present invention, there is provided a computer program configured for carrying out the method as described above.

According to another aspect of the present invention, there is provided a network analyzer for use in the method as described above.

## Brief Description of the Figures

An embodiment of the method in accordance with the present invention is now described, by way of example only, and with reference to the accompanying drawings:

Figure 1 illustrates an embodiment of a network in which the invention may be used advantageously;
Figure 2 shows schematically an interpretation of a first embodiment of the LIM;
Figure 3 shows a schematic diagram for the steps of an embodiment of the method according to the invention,
Figures 4a-4c show an embodiment of the effects of noise and the resulting single service indication for a link, and
Figures 5a-5e show another embodiment of the effects of noise and the resulting single service indication for a link.

## Description of Embodiments

The skilled person will understand that any references to a home network in the present description are strictly exemplary and not intended to limit the scope of application of the present invention to residential settings. The invention is in fact also applicable to other settings in which an access link and a local area network link are present, including office, industry, hospitality, and educational settings.

The number of transceivers shown in the figures is chosen for illustrative purposes only, and does not limit the generality of the invention in any way. Operations described in relation to a given transceiver may apply, *mutatis mutandis,* to other transceivers in the network.

The home networks have been seen as the customer's responsibility since the physical wiring is within the customers premises. However, to establish customer loyalty while increasing revenue, service/network providers must quickly and efficiently correct any problems that surface inside the home network as well. To satisfy customer expectations the operators must deliver broadband services with no interference from other traffic. In particular, the service quality is the main issue in gaining the customers trust.

When faced with obvious service quality issues (usually reported by customer) the operators will dispatch their technicians to pinpoint the source of the problem and possible solution.

Thus, the main technical problem is to enable service assurance within the home network and allow service/network operators to take actions before the customer calls the help desk.

Currently, only manual service assurance, by operator's technicians is possible for in-house networks. This type of service assurance diagnostic is a reaction to the customer complains which triggers the dispatch of technicians to investigate the problems. This procedure is very time consuming and highly costly. Thus, a more proactive automatic service diagnostics method is our goal.

The present invention is *inter alia* based on the insight that it is advantageous to summarize the quality of services in a single indicator.

Our aim is to propose a new diagnostics method to localize faults within home network environment in automated fashion. In particular, this invention is valuable for G.hn home networking deployments.

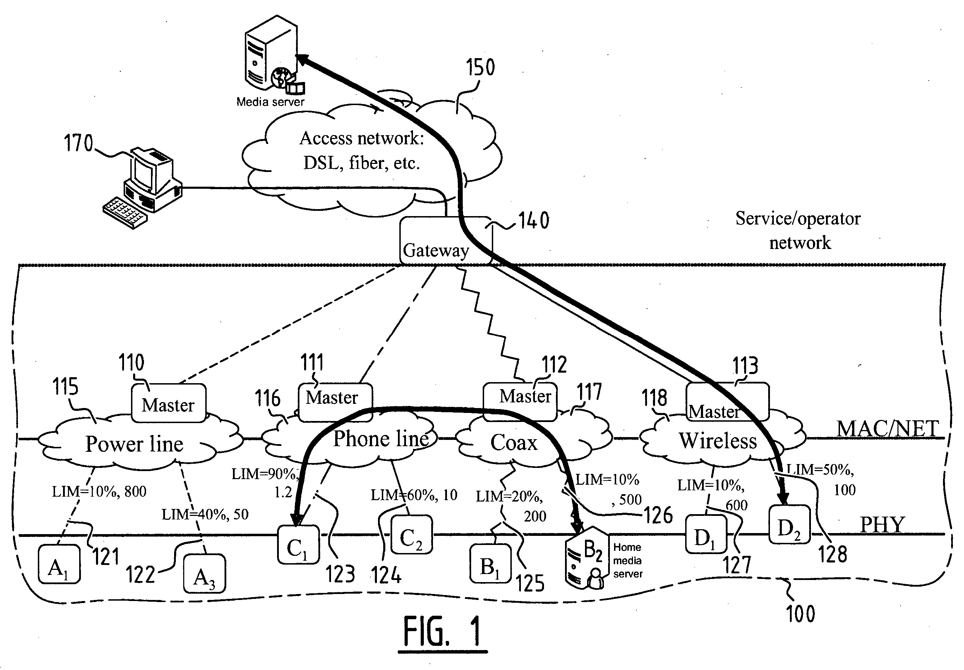

The new method will enable efficient service assurance of home networks, where the simplified home network architecture over different mediums (power lines, wireless, coax and phone lines) is illustrated in Fig. 1.

For any of the embodiment quality of service indicators can be collected over time resulting in a collection of historical data allowing feedback analysis.

Figure 1 conceptually illustrates how the method of the present invention may be carried out in part or completely from outside the home network. A network analyzer 170 is operatively connected to a gateway 140 and the customer premises equipment 100 preferably by means of a remote configuration protocol. In applicable cases, TR-069 may be used as the remote configuration protocol. Although the connection network analyzer 170 and customer premises equipment 100 is shown as via a network or 'cloud' 150, a direct connection is also possible.

Without loss of generality, the customer premises equipment 100 comprises a several master nodes 110-113. In this embodiment each master node 110-113 serves a local area network at the customer premises using a different medium. Master node 110 uses power lines, master node 111 uses phone lines, master node 112 uses coax cables, and master node 113 forms the switch to a wireless local area network.

Each of the local networks 115-118 can comprise one or more network devices A1, A3, C1, C2, B1, a home media server B2, D1 and D2.

In order to carry out an embodiment of the method of the present invention, the customer premises equipment 100 may be instructed by the network analyzer 170 to selectively activate a transceiver in the gateway 140.

The gateway 140 acts as a proxy for the other LAN transceivers. For this purpose, the gateway 140 may be required to relay management messages from and to the network analyzer 170, optionally translating between the protocol used by the network analyzer 170 (e.g., TR-069) and a different management protocol used inside the LAN.

According to an embodiment of the invention the method allows service assurance by evaluating different independent links between the gateway (GW) and the network devices A1-D2. The gateway 140 communicates with the network device A1-D2 from a particular domain 115-118 via its master node 110-113.

In an embodiment the gateway provide the network parameter information such as the value of a particular quality of service parameter relating to a specific link with one of the network device to the remote server. Moreover, the remote server is able to access the parameters and initiate the measurements of the network status parameters.

The customer premises network 110 is increasingly used for information sharing, for example media content sharing, video conferencing with remote participants, etc. Increasingly network devices A1-D2 in multiple locations will wish to access media server content. Peer-to-peer architecture will be used. Figure 1 shows an example comprising two media servers. Media server 180 is located in the internet domain (e.g., within the operator network). Media server B2 is a server within the home network 100. Other different services such as HDTV, Triple play, etc., could also be accessed over the network creating traffic over the different mediums 115-118.

In an embodiment the link identification metric (LIM) is defined as an indicator that defines the link quality level for a selected group, but preferably for each of the network devices A1-D2. The links shown in Figure 1 are links 121-128.

In this description 121 - 128 refers to each link, while 121,122,...,128 refers to one or several links. In this description the combination (M1,E1) or the set of combinations {(M1, E1), (M2, E2), ... (Mn, En) } refers to a indicator based on a measured value and an expected value.

In an embodiment LIM is defined as LIM = {$\alpha$, $\beta$}, where $\alpha$ and $\beta$ are defined as

$$\begin{cases} \alpha = \dfrac{AverageRate}{ExpectedRate}\Big|_{per\ medium} \\[3mm] \beta = \dfrac{MeasuredBER}{ExpectedBER}\Big|_{per\ medium} \end{cases}$$

Thus, based on determined/measured and predetermined/expected parameters the corresponding LIM is created and can be used as agnostic service parameter.

Moreover, LIM can be defined by other physical-layer and network statistic parameters such as signal-to-noise ratio (SNR), channel gain, list of devices, list of neighbour devices, list of device ID's, list of available neighbouring networks and indication of presence.

Based on the values of $\alpha$ and $\beta$ the LIM service parameter can be used to identify the link quality each of the links and for the different media services as illustrated in Fig. 1.

In the example illustrated in figure 1, $\alpha$ indicator is given in percent, while $\beta$ indicator is a number larger than 0. For the $\alpha$ ratio forming an indication of the average rate, a value above 60% would be an indication for a good link. For the bit rate error is can be assumed that values of $0<\beta\approx1$ indicate good link conditions, while values of $\beta>>1$ indicate poor link conditions.

Thus in this embodiment, in the case of poor LIM indicator (e.g., LIM={10%, 800} for network device A1 using link 121) some network segments belonging to a particular medium can be identified as "poor service link". On the other hand, for links with good LIM indicator (e.g., LIM={90%, 1.2}) some network device C1 using link 123 belonging to a particular medium 116 can be identified as 'high service link'.

Network analyzer 170 can collect LIM indicators for both locations of the media streaming server. Service assurance and diagnostics can be made remotely within the home network.

The remote server 170 can calculate the LIM indicator from the provided values from the gateway 140. The calculated (set of) indicator values can be stored to identify the potential links with good quality and enable services with high data rate profiles such as HDTV for example.

By using LIM indicators, it is also possible to illustrate the network behavior and thus, the network operator can suggest potential actions to the customers.

The LIM calculator may reside within a customer premises, e.g. as part of the gateway 140. In that embodiment the LIM calculator can integrate both the DSL and the home network chips.

In another embodiment the LIM calculator is part of the remote server 170 in the access operator's network that talks to the in-home devices, e.g. through the TR-069 protocol. This protocol could allow the configuration of the overall transmit power, and certain aspects of the shape of the PSD, such as the application of spectral notches, amongst other things.

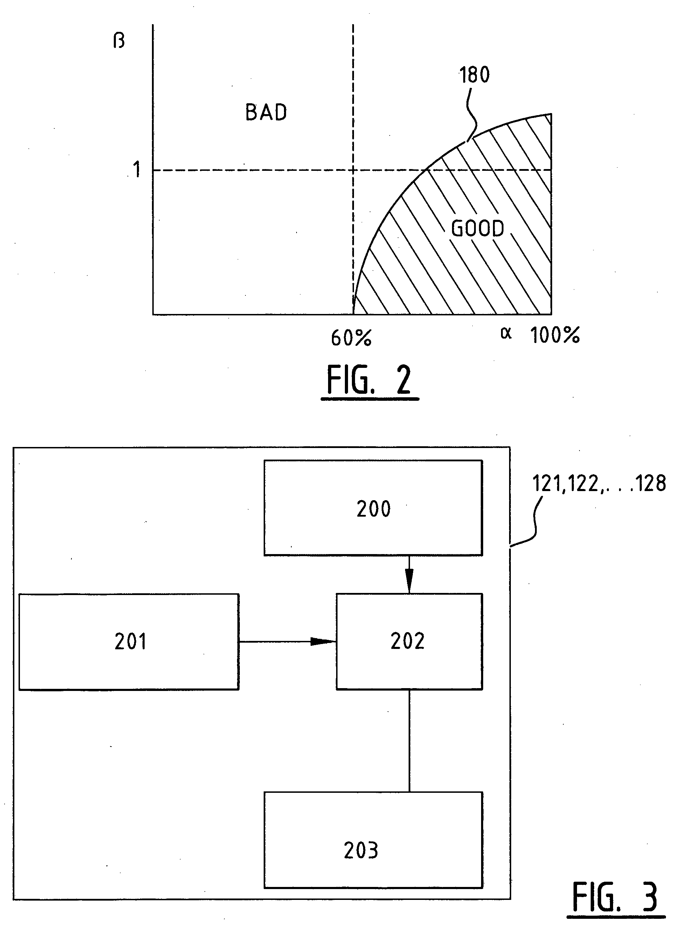

Figure 2 is a schematic illustration of two dimensional interpretation of the LIM 'translated' to a good or bad experience for the user. The x-axis is formed by $\alpha$, while $\beta$ is indicated on the y-axis. The shadowed area under curve 180 shows the field for the LIM indicator for respective links that corresponds to a good link experience by the user.

The good / bad experience can be indicated to the operator or user by a green / red color and forms a summary for the experience by the user. The user can be provided with the results of several, preferably all, links in the network, allowing to identify a possible cause of the problem experienced in the network.

As will be clear to the skilled person, the two dimensional space of Figure 2 can be expanded into a three or multi dimensional space if more measured and expected quality of service parameters are taken into account.

Figure 3 illustrates an embodiment of the method according to the invention. At step 200 at least one value M1, M2, ..., Mn for a quality of service parameter is measured. The expected value E1, E2, ..., En is e.g. available from a memory 201. The determined and predetermined values are combined in step 202 for each available value into a set { (M1, E1), (M2, E2), ... (Mn,En) } forming the indicator (LIM). The combining preferably comprises taking the ratio. The set is exported to a FIFO memory in step 203 in order to obtain a historic overview of the set allowing problem analysis.

The method 200-203 can be performed for several (121, 122,...,128), preferably all (121-128) links of the network. By collecting several LIM's for several links, an analysis of (a part of) the network is possible.

The method can be performed at the client and can be made available directly at the client. In an embodiment part of the method is performed at the network analyzer 170 or gateway 140.

A further embodiment is provided. In this embodiment four services are identified: HD-TV, SD-TV, VoiceOverIP and Messaging. Clearly more services could be identified.

As quality of service parameters current frame rate (CFR), noise, MAC-address and bitrate are determined. Preferably expected quality of service parameters are provided for the CFR, noise and bitrate. These expected or predetermined values can be deducted from historical rates of these quality of service parameters.

In the LIM the ratio of current rates are collected. The expected rate is defined in the PHY-layer technology standard. Preferably the LIM provides for a percentage of the determined as a deviation from the historical values. The LIM is provided as vector, e.g. [30%,30%, MAC-address, 90%] for a link that has 30% lower CFR than expected, 30% more noise, and a bitrate of 90%.

For the service HD-TV a predetermined operating domain can be configured with the following values: the deviation of CFR should be in the domain of maximum 15%. The noise for HD-TV should be in the same domain, max 15%. M3 should be present and can be used to detect the device type connected to the link. The bitrate should be above 80% in case of a 120Mbs line. In this case the single service indication will show for the service HD-TV that the link is not suitable. The service indication can be a Boolean YES/NO if the MAC-address can be linked to a HD-TV service.

For SD-TV the respective predetermined domains can be: [Max 30%, max 15%, indefinite, min 50%] or e.g. : [15-30%, 10-15%, indefinite, 50-80%] for the LIM vector defined as CFR, noise, MAC-address, bitrate. CFR and noise are defined by deviation from historical values. This link with this LIM is agnosticly determined according to this method as suitable for SD-TV.

For VoiceOverIP and messaging, the allowed deviation of CFR could be even higher, e.g. max 50% and max 80% respectively. The noise should still be less than 15% for both services. The bitrate could be min. 30% or even lower for messaging. In this example the link is suitable for both services.

Also in this example: if only the bitrate would have been taken into account in order to determine the suitability of a service for said link, it would have been determined that the link should be suitable for all services. According to the method of the invention the method for determining is improved.

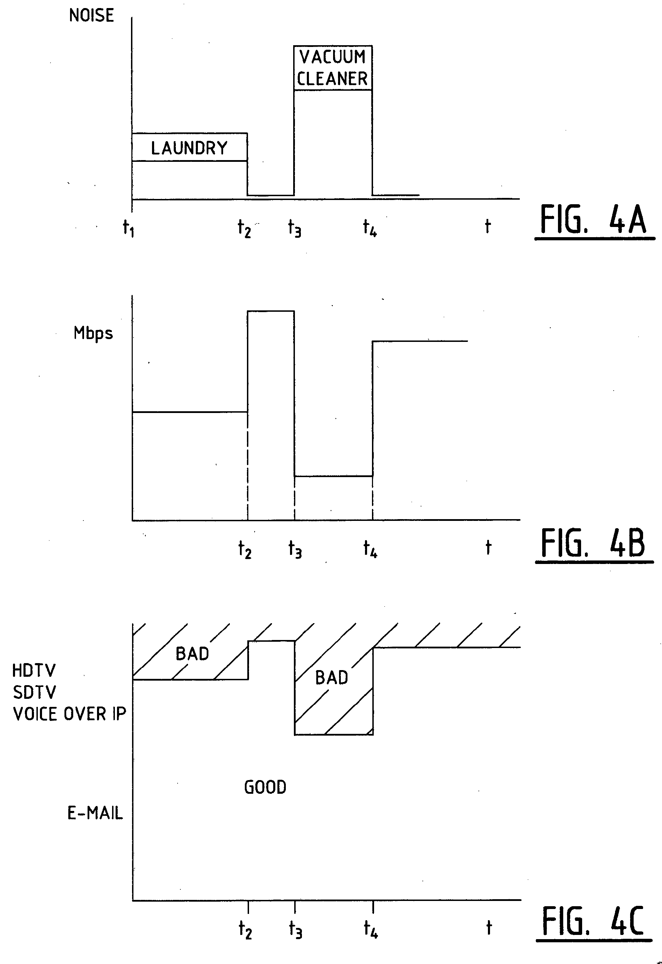

Figure 4a shows two sources of noise. From t1 until t2 a laundry machine is working. From t3 until t4 a vacuum cleaner is in operation.

In Figure 4b a resulting achievable data rate is represented and in Figure 4c the single service indication is indicated. The achievable data rate for the selected link increases at t2 when the laundry machine stops, but decreases significantly at t3 when the vacuum cleaner produces a lot of noise.

As a result the single service indication for that link will indicate between t1 and t2 that the link is not suitable for HD-TV, but can be used for services up to SD-TV. If the LIM comprises a MAC address the single service indication can be linked to the service that the device intends to provide deducted from the MAC address and the single indication can indicate RED/GREEN for not able or able. Between t3 and t4 the achievable bitrate drops to such an extent that only VoiceOverIP or lower services can be used over the link as indicated in Figure 4c. In figure 4c the shaded part of graph indicates services not available.

Between t1 and t2 a LIM vector of SNR, Bitrate and noise level could indicate LIM = {50%, 70%, 20%} wherein SNR is defined based on the QoS requirement, bitrate is indicated as the available percentage of the bitrate of the link, while the noise is defined as a percentage above the average noise level - which can be estimated and usually is similar in different houses. At t2 the LIM = {90%, 90%, 15%} and at t3 the LIM = {30%, 20%, 80%}. Although this example generally links a single parameter (bitrate) to the single service indication, clearly the basis for determining the single service indication is to be based on multiple parameters.

The embodiment of Figure 4 is shown specifically for demonstrating the single status indication for a link as a result of external noise. Now an embodiment is provided wherein status indication changes are the result of network internal causes.

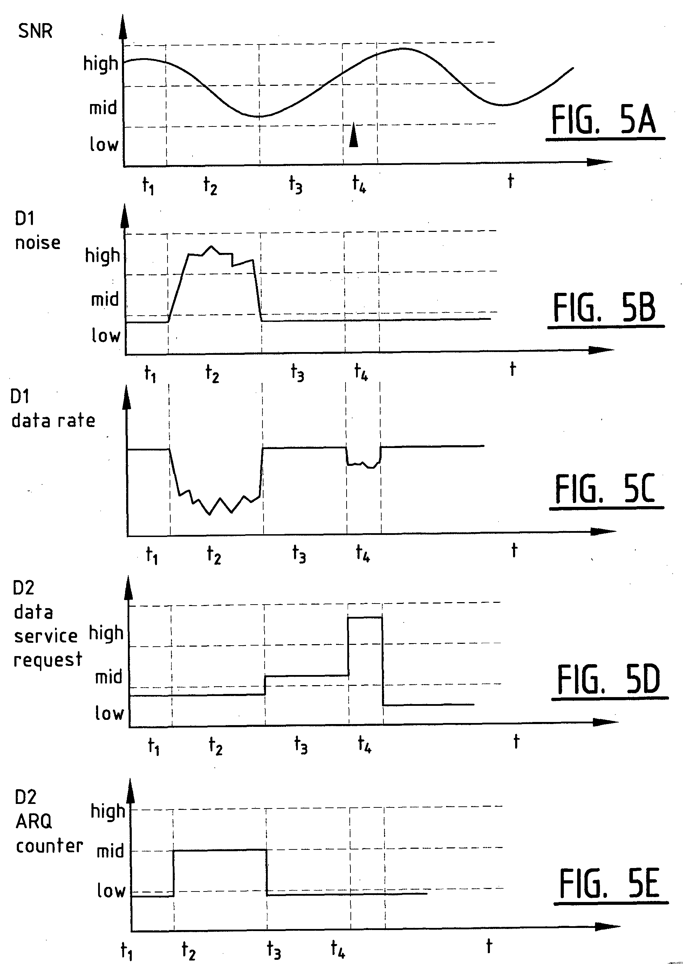

Figure 5a-5e are graphical representations that depict schematically the development of LIM parameters over time. Here the multidimensional index LIM for D1 is defined as LIM=[{M11,M12...M1n};{M21,M22...M2m}], wherein M11,M12,...M1n are values related to determinations regarding the link connecting D1 with the network, while M21,M22..., M2m are quality of service values determined with respect to device 2 (D2) connected through another link. From such a LIM it is possible to indicate a possible network internal source of the status indication change/service loss.

Figure 5a shows a signal noise ratio varying over time. In the time period t1 the SNR is high, dropping over time period t2, increasing over time period t3 and remaining high during time period t4. Figure 5b shows noise over time as determined for a link in the network connected to device D1. In the time period t2 a significant amount of noise is present. Figure 5c shows that during time period t2 the achievable bitrate drops. This results in a drop in the single status indication. At t3 the status improves again.

Also in t2 it can be seen that the noise level is high and by correlating this information with D1 data rate drop and good SNR level, it can be concluded that the noise is the cause of this data rate drop. However, from the determined parameters for the D1 link is not clear if the noise is the only problem.

Figures 5d and 5e represent determined values of some of the quality of service parameters for a second link connecting D2 with the home network. Figure 5d represents the data service request rate and automatic repeat request (ARQ) counter. At t2 D2 is making an increased number of retransmissions.

The increased number of retransmissions at t2 in D2 may be an additional cause for the significant data rate drop of D1 during t2. Thus, using a multidimensional index comprising determined parameters relating to two or more links in the network, allow obtaining more reliable link quality and CAUSE (other device, noise...etc.) interpretation.

At t4 however the achievable bitrate for the link drops without a noise cause. By using the multidimensional LIM defined above (including determined parameters from other links) it is possible to correlate the determined data for certain D1 and D2 parameters. The correlation allows determining the cause of data rate drop in t4. In this embodiment during t4, as the result of correlation between D1's noise (fig 5b) and data rate (fig 5c) can be correlated with D2 service data request (fig 5d), it can be concluded that the D2's data rate consumption is causing the data rate drop for D1. Such an indication for a cause can be provided to the user and/or to the service provider over the internet.

The determined causes in combination with time stamps can be stored, either in the home network, in the gateway or remotely in the cloud or at the service provider premises to allow to access historical data of service performances in the home network.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared.

Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

**Claims**

1. A method for providing a service indication in a home network by monitoring customer network parameters relating to quality of service in a customer network comprising a gateway having links to multiple local access network devices, said method comprising for a selected number of at least two links (121,122,...):

- determining values (M1 or M2 or ...) for at least quality of service parameters current frame rate (CFR), noise, MAC-address and bitrate for each selected link; and
- forming quality of service indicators (LIM) {(M1),(M2),...} for each selected link (121, 122, ...) using the determined values for the quality of service parameters;

wherein the method further comprises providing a single service indication for each selected link based on combinations of values of the quality of service indicator (LIM) for each selected link (121, 122, ...) wherein the method comprises collecting and storing the quality of service indicators (LIM) over time in order to provide historical data for the single service indication of each selected link wherein the method also comprises providing predetermined values (E1 or E2 or ...) for the quality of service parameters for each selected link and forming the quality of service indicator for each selected link is based on the determined and predetermined values for each quality of service parameter

wherein the single service indication provides an indication whether the link is available for

- HD-TV when current frame rate (CFR) deviation is maximum 15%, noise is maximum 15%, MAC-address is present and bitrate is above 80%;
- SD-TV when current frame rate (CFR) deviation is maximum 30%, noise is maximum 15%, MAC-address is indefinite and bitrate is above 50%;
- VoiceOverIP when current frame rate (CFR) deviation is maximum 50%, noise is maximum 15%, MAC-address is indefinite and bitrate is above 30%;
- Messaging when current frame rate (CFR) deviation is maximum 80%, noise is maximum 15%, MAC-address is indefinite and bitrate is above 30%.

2. A method according to claim 1, wherein forming the quality of service indicator comprises forming a vector of at least the determined quality of service parameters (LIM) { (M1), (M2), ...} for each selected link (121, 122, ...).

3. A method according to claim 2, wherein the quality of service indicator for each selected link also comprises one or more link variables such as physical-layer and network statistic parameters such as signal-to-noise ratio (SNR), channel gain, list of devices, list of neighboring devices, list of device ID's, list of available neighboring networks and indication of presence.

4. Method according to any of the preceding claims, wherein forming the quality of service indicator for a first link comprises using determined values for quality of service parameters of other links from the selected links.

5. Method according to claim 4, wherein the single service indication provides an indication of whether the selected link is suitable for the device connected to the link using the MAC-address as identification for the service to be provided over the link.

6. Method according to claim 4 or 5, wherein the single status of a first link provides an indication whether the first link is suitable for the link device connected with the second link.

7. Method according to any of the preceding claims, wherein the value for the quality of service parameter for the link is determined at the gateway and wherein preferably the gateway transmits the values for the quality of service to a remote network analyzer connected to the gateway outside the home network and wherein more preferably the indicator(s) for the quality of service for the link is determined at the network analyzer and wherein even more preferably the network analyzer is integrated into gateway.

8. Method according to any of the preceding claims, wherein the selected number of links comprise each link (121-128) in the customer network.

9. A computer program configured for carrying out the method of any of the preceding claims.

10. A network analyzer configured to carry out all of the steps of method claim 7.

**Patentansprüche**

1. Verfahren zur Bereitstellung einer Dienstanzeige in einem Heimnetzwerk durch Überwachung der Kundennetzwerkparameter in Bezug auf die Dienstqualität in einem Kundennetzwerk, umfassend ein Gateway mit Verbindungen zu mehreren lokalen Zugangsnetzvorrichtungen, wobei besagtes Verfahren für eine gewählte Anzahl von mindestens zwei Verbindungen (121, 122, ...) Folgendes umfasst:

  - Bestimmen von Werten (M1 oder M2 oder ...) für mindestens die aktuelle Bildfrequenzrate (CFR) der Dienstqualitätsparameter, das Rauschen, die MAC-Adresse und Bitrate für jede gewählte Verbindung; und
  - Bilden von Dienstqualitätsindikatoren (LIM) {(M1), (M2), ...} für jede gewählte Verbindung (121, 122, ...) unter Verwendung der bestimmten Werte für die Dienstqualitätsparameter;

wobei das Verfahren weiterhin das Bereitstellen einer einzelnen Dienstanzeige für jede gewählte Verbindung basierend auf Kombinationen von Werten des Dienstqualitätsindikators (LIM) für jede gewählte Verbindung (121, 122, ...) umfasst, wobei das Verfahren das zeitliche Erfassen und Speichern der Dienstqualitätsindikatoren (LIM) umfasst, um historische Daten für die einzelne Dienstanzeige von jeder gewählten Verbindung bereitzustellen, wobei das Verfahren ebenfalls das Bereitstellen von vorausbestimmten Werten (E1 oder E2 oder...) für die Dienstqualitätsparameter für jede gewählte Verbindung umfasst und das Bilden des Dienstqualitätsindikators für jede gewählte Verbindung auf den bestimmten und vorausbestimmten Werten für jeden Dienstqualitätsparameter basiert,
wobei die einzelne Dienstanzeige eine Anzeige bereitstellt, ob die Verbindung verfügbar ist für

  - HD-TV, wenn die Abweichung der aktuellen Bildfrequenzrate (CFR) maximal 15% beträgt, das Rauschen maximal 15% beträgt, die MAC-Adresse vorhanden ist und die Bitrate über 80% beträgt;
  - SD-TV, wenn die Abweichung der aktuellen Bildfrequenzrate (CFR) maximal 30% beträgt, das Rauschen maximal 15% beträgt, die MAC-Adresse unbestimmt ist und die Bitrate über 50% beträgt;
  - VoiceOverIP, wenn die Abweichung der aktuellen Bildfrequenzrate (CFR) maximal 50% beträgt, das Rauschen maximal 15% beträgt, die MAC-Adresse unbestimmt ist und die Bitrate über 30% beträgt;
  - Nachrichtenübermittlung, die Abweichung der aktuellen Bildfrequenzrate (CFR) maximal 80% beträgt, das Rauschen maximal 15% beträgt, die MAC-Adresse unbestimmt ist und die Bitrate über 30% beträgt.

2. Verfahren nach Anspruch 1, wobei das Bilden des Dienstqualitätsindikators das Bilden eines Vektors von mindestens den bestimmten Dienstqualitätsparametern (LIM) {(M1), (M2), ...} für jede gewählte Verbindung (121, 122, ...) umfasst.

3. Verfahren nach Anspruch 2, wobei der Dienstqualitätsindikator für jede gewählte Verbindung ebenfalls eine oder mehrere Verbindungsvariablen umfasst, wie etwa physikalische Schicht- und Netzwerkstatistikparameter, wie etwa Signal-RauschVerhältnis (SNR), Kanalverstärkung, Liste von Vorrichtungen, Liste benachbarter Vorrichtungen, Liste von Vorrichtungs-IDs, Liste verfügbarer benachbarter Netzwerke und Anwesenheitsanzeige.

**4.** Verfahren nach einem beliebigen der vorstehenden Ansprüche, wobei das Bilden des Dienstqualitätsindikators für eine erste Verbindung das Verwenden von bestimmten Werten für Dienstqualitätsparameter von anderen Verbindungen aus den gewählten Verbindungen umfasst.

**5.** Verfahren nach Anspruch 4, wobei die einzelne Dienstanzeige eine Anzeige dafür bereitstellt, ob die gewählte Verbindung für die Vorrichtung geeignet ist, die an die Verbindung angeschlossen ist, welche die MAC-Adresse als Identifikation für den Dienst verwendet, der über die Verbindung bereitzustellen ist.

**6.** Verfahren nach Anspruch 4 oder 5, wobei der einzelne Status einer ersten Verbindung eine Anzeige bereitstellt, ob die erste Verbindung für die Verbindungsvorrichtung geeignet ist, die an die zweite Verbindung angeschlossen ist.

**7.** Verfahren nach einem beliebigen der vorstehenden Ansprüche, wobei der Wert für den Dienstqualitätsparameter für die Verbindung am Gateway bestimmt wird und wobei vorzugsweise das Gateway die Werte für die Dienstqualität an einen entfernten Netzwerkanalysator sendet, der an das Gateway außerhalb des Heimnetzwerks angeschlossen ist und wobei besonders bevorzugt der (die) Indikator(en) für die Dienstqualität für die Verbindung am Netzwerkanalysator bestimmt wird (werden) und wobei ganz besonders bevorzugt der Netzwerkanalysator in das Gateway integriert ist.

**8.** Verfahren nach einem beliebigen der vorstehenden Ansprüche, wobei die gewählte Anzahl von Verbindungen jede Verbindung (121-128) im Kundennetzwerk umfasst.

**9.** Computerprogramm, das zum Durchführen des Verfahrens nach einem beliebigen der vorstehenden Ansprüche ausgelegt ist.

**10.** Netzwerkanalysator, der zum Durchführen aller Schritte des Verfahrens nach Anspruch 7 ausgelegt ist.

**Revendications**

**1.** Procédé pour fournir une indication de service dans un réseau domestique par le contrôle des paramètres de réseau client relatifs à la qualité de service dans un réseau client comprenant une passerelle présentant des liaisons vers de multiples dispositifs de réseau d'accès local, ledit procédé comprenant pour un nombre sélectionné d'au moins deux liaisons (121,122,...) les étapes suivantes :

- déterminer des valeurs (M1 ou M2 ou ...) pour le taux de trame actuel (CFR) des paramètres de qualité de service et/ou le bruit et/ou l'adresse MAC et/ou le débit binaire pour chaque liaison sélectionnée ; et
- former des indicateurs de qualité de service (LIM){(M1),(M2),...} pour chaque liaison sélectionnée (121, 122, ...) en utilisant les valeurs déterminées pour les paramètres de qualité de service ;

le procédé comprenant en outre la fourniture d'une indication de service unique pour chaque liaison sélectionnée sur la base de combinaisons de valeurs de l'indicateur de qualité de service (LIM) pour chaque liaison sélectionnée (121, 122, ...), le procédé comprenant la collecte et le stockage des indicateurs de qualité de service (LIM) dans le temps afin de fournir des données historiques pour l'indication de service unique de chaque liaison sélectionnée, le procédé comprenant également la fourniture de valeurs prédéterminées (E1 ou E2 ou ...) pour les paramètres de qualité de service pour chaque liaison sélectionnée et la formation de l'indicateur de qualité de service pour chaque liaison sélectionnée est basée sur les valeurs déterminées et prédéterminées pour chaque paramètre de qualité de service dans lequel l'indication de service unique indique si la liaison est disponible pour

- HD-TV lorsque l'écart du taux de trame actuel (CFR) est de 15 % maximum, le bruit est de 15 % maximum, l'adresse MAC est présente et le débit binaire est supérieur à 80%;
- SD-TV lorsque l'écart du taux de trame actuel (CFR) est de 30 % maximum, le bruit est de 15% maximum, l'adresse MAC est indéterminée et le débit binaire est supérieur à 50 % ;
- Voix sur IP lorsque l'écart du taux de trame actuel (CFR) est de 50 % maximum, le bruit est de 15% maximum, l'adresse MAC est indéterminée et le débit binaire est supérieur à 30 % ;
- Messagerie lorsque l'écart du taux de trame actuel (CFR) est de 80 % maximum, le bruit est de 15% maximum, l'adresse MAC est indéterminée et le débit binaire est supérieur à 30 %.

**2.** Procédé selon la revendication 1, dans lequel la formation de l'indicateur de qualité de service comprend la formation d'un vecteur d'au moins les paramètres de qualité de service (LIM) {(M1), (M2), ... } déterminés pour chaque liaison sélectionnée (121, 122, ...).

**3.** Procédé selon la revendication 2, dans lequel l'indicateur de qualité de service pour chaque liaison sélectionnée comprend également une ou plusieurs variables de liaison comme la couche physique et les paramètres statistiques du réseau comme le rapport signal sur bruit (SNR), le gain de canal, la liste des dispositifs, la liste des dispositifs voisins, la liste des ID de dispositifs, la liste des réseaux voisins disponibles et l'indication de présence.

4. Procédé selon l'une quelconque des revendications précédentes,
dans lequel la formation de l'indicateur de qualité de service pour une première liaison comprend l'utilisation de valeurs déterminées pour des paramètres de qualité de service d'autres liaisons parmi les liaisons sélectionnées.

5. Procédé selon la revendication 4, dans lequel l'indication de service unique indique si la liaison sélectionnée est adaptée au dispositif connecté à la liaison utilisant l'adresse MAC en tant qu'identification pour le service à fournir sur la liaison.

6. Procédé selon la revendication 4 ou 5, dans lequel l'état unique d'une première liaison indique si la première liaison est adaptée au dispositif de liaison connecté à la deuxième liaison.

7. Procédé selon l'une quelconque des revendications précédentes, dans lequel la valeur pour le paramètre de qualité de service pour la liaison est déterminée au niveau de la passerelle et dans lequel de manière préférable la passerelle transmet les valeurs pour la qualité de service à un analyseur de réseau distant connecté à la passerelle à l'extérieur du réseau domestique et dans lequel de manière plus préférable le(s) indicateur(s) pour la qualité de service pour la liaison est/sont déterminé(s) au niveau de l'analyseur de réseau et dans lequel de manière encore plus préférable l'analyseur de réseau est intégré dans la passerelle.

8. Procédé selon l'une quelconque des revendications précédentes, dans lequel le nombre sélectionné de liaisons comprend chaque liaison (121 à 128) dans le réseau client.

9. Programme informatique configuré pour exécuter le procédé selon l'une quelconque des revendications précédentes.

10. Analyseur de réseau configuré pour exécuter toutes les étapes du procédé selon la revendication 7.

Service/operator network

Access network: DSL, fiber, etc.

Media server

150

140

Gateway

170

110 Master — Power line — 115

111 Master — 116

112 Master — 117

113 Master — Wireless — 118

MAC/NET

Phone line

Coax

PHY

LIM=10%, 800

LIM=40%, 50

A₁ 121 122 A₃

LIM=90%, 1.2

C₁ 123 124 C₂ — LIM=60%, 10

LIM=20%, 200

B₁ 125

LIM=10%, 500 — B₂ 126 Home media server

LIM=10%, 600 — D₁ 127

LIM=50%, 100 — D₂ 128

100

**FIG. 1**

12

EP 2 530 876 B1

FIG. 2

FIG. 3

13

NOISE

VACUUM
CLEANER

LAUNDRY

$t_1$     $t_2$   $t_3$    $t_4$     t

## FIG. 4A

Mbps

$t_2$   $t_3$    $t_4$     t

## FIG. 4B

HDTV
SDTV
VOICE OVER IP

BAD

BAD

GOOD

E-MAIL

$t_2$   $t_3$    $t_4$     t

## FIG. 4C

14

SNR

FIG. 5A

D1
noise

FIG. 5B

D1
data rate

FIG. 5C

D2
data
service
request

FIG. 5D

D2
ARQ
counter

FIG. 5E